# EUROPEAN PATENT APPLICATION

(11) **EP 2 210 747 A1**
(43) Date of publication of application: **28.07.2010**
(21) Application number: 10150675.6
(22) Date of filing: 13.01.2010
(51) Int. Cl.: B42D 1/00, A63H 33/38, G09B 19/08, G09B 23/30

(54) **Book containing model components combinable to form a model**

(30) Priority: 13.01.2009 US 204970 P; 27.05.2009 US 455101
(71) Applicant: Becker & Mayer, Bellevue, WA 98004-1444 (US)
(72) Inventor: Becker, James F., Bellevue, WA 98005 (US); Barr, Andrew D., Seattle, WA 98112 (US)
(74) Representative: Maccalli, Marco

(57) **Abstract**

A book includes a model assembly made from a plurality of model components attached to respective pages. The model can be a human body or anything desired. When the book is closed, the model components combine to form a completely assembled model assembly. When the book is open, and as a reader turns each page, the model components attached to the respective page separate from the model assembly revealing other components that remain combined to form a partially assembled model assembly. The components can be fixedly or hingedly attached to respective pages with connectors. If hingedly attached, the model components can be separated from the model assembly without turning a respective page.

## Description

A model is worth a thousand words. A person typically learns more, quicker, when he/she can observe, touch, study the parts of a model in two or three dimensions. With a quick study of model parts, a person gains information that typically requires paragraphs if not pages of text to develop and explain. For example, a model of the parts of a human body can quickly convey to a person the numbers and shapes of bones in the arms, legs, hands, and fingers, as well as the proportional sizes of the arms to the legs, the hands to the feet, the fingers to the toes, and the hands to body. To receive this same information from text, a reader typically has to read one or more pages. In addition, studying a model typically increases a person's attention and thus increases the person's comprehension. When combined with text to convey information, a model becomes even more powerful.

There are books that include multi-part models within a book; however many of these books contain models that are thicker than the book. Thus, a portion of the model protrudes through the front cover or back cover or both. This can be expensive to a manufacturer when he/she ships the book to a vendor because to secure the books within a box, special packing inserts or packing material must be placed between each book. A model protruding from one or both of the covers of a book can also be frustrating to a vendor or purchaser of the book because the book can not be stacked with other books and will not fit neatly on a shelf. Thus, a book containing a multi-part model that does not protrude from the front cover, back cover or both is very desirable.

In addition, many of the books include components that are not attached to other components of the model or any page in the book but rather are stored in one or more pockets in one or more pages. To assemble the model, the reader must first find and retrieve the loose component and then combine it with another component using written instructions provided on a page. Unfortunately, these books suffer three drawbacks. First, the reader may inadvertently combine the components of the model incorrectly by misunderstanding the written instructions, and thus, misunderstand some of the information conveyed by the components and assembled model. Second, the reader typically has to hold the components in their proper location and thus can not typically assemble more than two components together. Finally, in these books, the components can be easily lost depriving subsequent readers of the informational value of the lost component as well as the assembled model.

Therefore there is need for a book that contains a model that does not protrude from the front or back cover. There is also a need for a book that contains model components attached to pages of the book and that can be combined together to assemble the model or can be separated from the model. Such a book would allow the reader to study the individual model components as well as how the components combine to make the model. This allows the user to better understand and fully comprehend the information the model and the model components convey.

### SUMMARY

One or more aspects of a solution according to specific embodiments of the invention are set out in the independent claims, with advantageous features of the same solution that are set out in the dependent claims (which wording is herein incorporated *verbatim* by reference).

Particularly, in one aspect of the invention, a book includes a plurality of pages bound together, and a plurality of model components that, when the book is closed, combine to form a model assembly that represents a subject of the book. The plurality of model components includes a first flat model component attached to one of the pages, wherein the first model component represents an element of the book's subject and has a two-dimensional shape similar to the shape of the element that the first model component represents. The plurality of model components also includes a second flat model component attached to another of the pages, wherein the second model component represents another element of the book's subject and has a two-dimensional shape similar to the shape of the element that the second model component represents. The model assembly has a thickness less than or equal to the sum of the page thicknesses, thus, allowing the book to lie substantially flat on a surface when either the cover or back of the book contacts the surface. In addition, the book can be shipped, displayed and stored much easier and more efficiently than a book having a portion of its model protruding from one of its covers. When the book is opened, the model assembly is partially unassembled and, by turning successive pages, the model assembly becomes increasingly disassembled. This allows a reader to maintain interest in the subject matter and also provides the reader with information that is typically difficult to comprehend without seeing how the components combine.

In an embodiment of the invention, the subject of the book includes human anatomy.

In an embodiment of the invention, the subject of the book includes human anatomy and the elements of the book's subject include the intestines and the circulatory system.

In an embodiment of the invention, the subject of the book includes human anatomy and the elements of the book's subject include a portion of the muscular system and a portion of the skeletal system.

In an embodiment of the invention, the first model component represents muscles in the right arm and the right leg of a human, and the second model component represents bones in the left arm and the left leg of a human.

In an embodiment of the invention, the first model component's two-dimensional shape is defined by the first model component's periphery.

In an embodiment of the invention, each of the plurality of model components represents a respective element of the book's subject, and has a two-dimensional shape similar to the shape of the respective element that the model component represents.

In an embodiment of the invention, the first model component includes a graphic that represents the element of the book's subject that the first model component represents.

In an embodiment of the invention, when the book is closed, each of the plurality of model components is disposed above and/or below the immediately adjacent model component.

In an embodiment of the invention, the book further comprises a connector that attaches the first model component to the component's respective page.

In an embodiment of the invention, the book further comprises a connector that attaches the first model component to the component's respective page, and that includes a graphic for obscuring the appearance of the connector.

In an embodiment of the invention, the book further comprises a connector that attaches the first model component to the component's respective page, and that includes a black surface for obscuring the appearance of the connector.

In an embodiment of the invention, the book further comprises a connector that attaches the first model component to the component's respective page, and that includes a graphic for complimenting another of the plurality of model components.

In an embodiment of the invention, the book further comprises a connector that attaches the first model component to the component's respective page, and that includes a graphic; moreover, the first model component represents intestines of a human, the second model component represents a portion of the circulatory system of a human, and the graphic represents a portion of the portion of the circulatory system represented by the second model component.

In an embodiment of the invention, at least one of the model components is hingedly attached to the component's respective page.

In an embodiment of the invention, at least one of the plurality of pages includes a profiled edge located such that, when the book is closed, the profiled edge is adjacent the model assembly.

In an embodiment of the invention, the book further comprises a flap hingedly attached to one of the pages, and a connector that attaches the first model component to the flap.

In another aspect of the invention, the book includes a plurality of connectors, each attaching a respective one of the plurality of model components to a respective one of the plurality of pages. The plurality of connectors includes a first connector that attaches the first model component to the first model component's respective page. The plurality of connectors also includes a second connector that attaches the second model component to the second model component's respective page, and is disposed underneath the first connector, when the book is closed. Because the second connector lies underneath the first connector, a reader of the book is more likely to not be distracted by the connectors and thus more easily focus on the model and the model components of the book.

In an embodiment of the invention, the first connector covers more than half of the second connector.

In an embodiment of the invention, the first connector covers all of the second connector.

In an embodiment of the invention, the plurality of model components includes a third model component, and the first connector includes a graphic that compliments the third model component.

In an embodiment of the invention, the plurality of model components includes a third model component, and the first connector includes text that compliments the third model component.

### BRIEF DESCRIPTION OF THE FIGURES

A solution according to one or more embodiments of the invention, as well as further features and the advantages thereof, will be best understood with reference to the following detailed description, given purely by way of a non-restrictive indication, to be read in conjunction with the accompanying drawings (wherein corresponding elements are denoted with equal or similar references and their explanation is not repeated for the sake of brevity); in this respect, it is expressly intended that the figures are not necessary drawn to scale (with some details that may be exaggerated and/or simplified) and that, unless otherwise indicated, they are merely used to conceptually illustrate the structures and procedures described herein. Particularly:
**FIG. 1** is a perspective view of a book that includes a model, according to an embodiment of the invention.
**FIG. 2** is a perspective view of the book in **FIG. 1** opened to the book's first page, according to an embodiment of the invention.
**FIGS. 3** and **4** are partial, perspective views of a respective page of the book in **FIGS. 1** and **2****,** and the remaining, subsequent pages of the book, according to an embodiment of the invention.
**FIG. 5** is a perspective view of a component of the model shown in **FIGS. 1** - 4, according to an embodiment of the invention.
**FIG. 6** is a perspective view of another book that includes a model, according to another embodiment of the invention.

### DETAILED DESCRIPTION

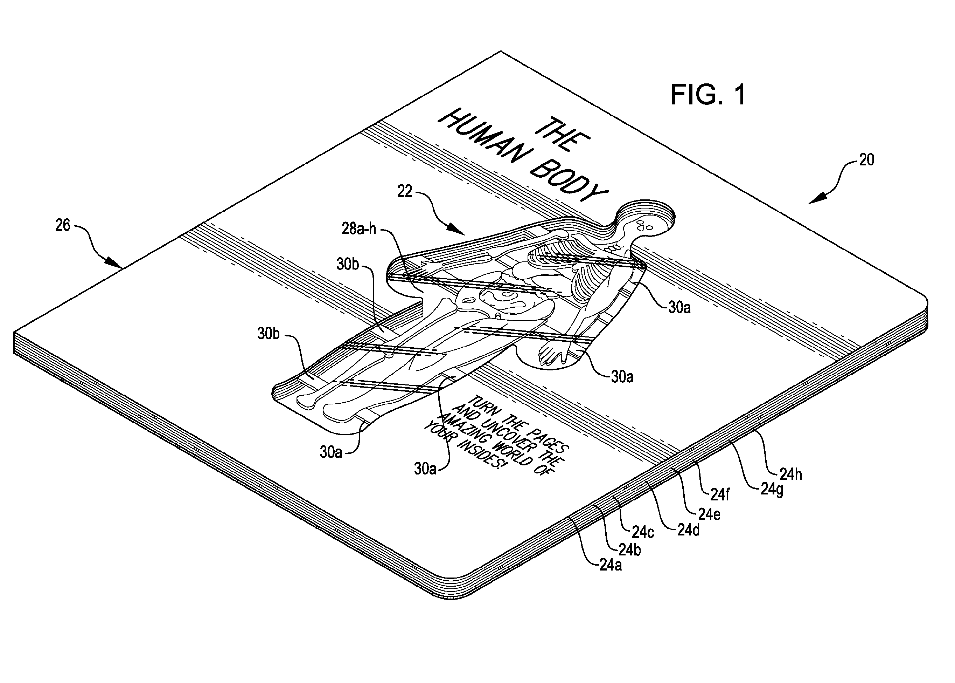

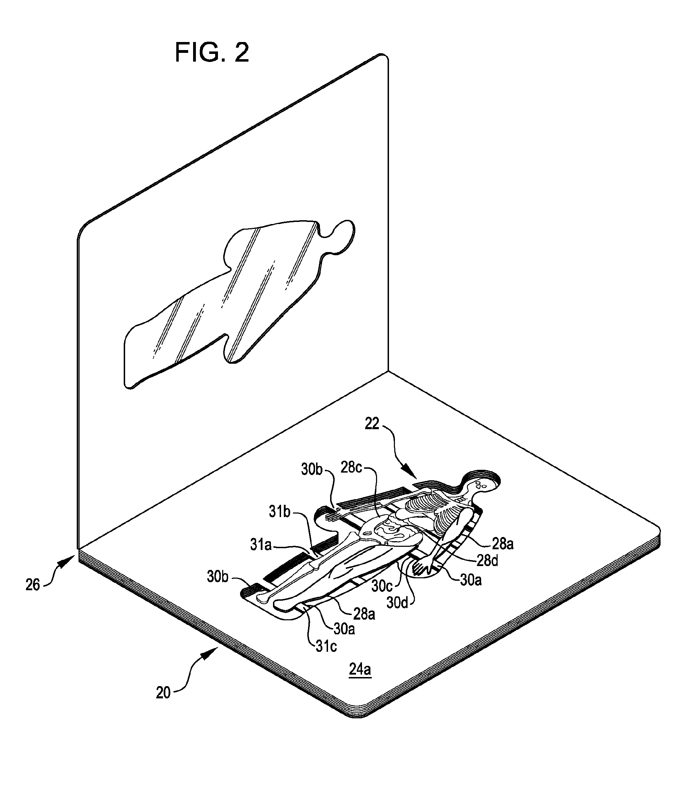

**FIG. 1** is a perspective view of a book 20 according to an embodiment of the invention. The book 20 includes a model assembly 22 that represents a subject of the book 20, and a plurality of pages 24a - 24h that are bound together to form a spine 26. The model assembly 22 includes a plurality of model components 28a - 28h (discussed in greater detail in conjunction with **FIGS. 2 - 5**) that represent an element of the book's subject. For example, in this and certain other embodiments, the subject of the book 22 includes anatomy of the human body, and elements of the subject include muscles, bones, the circulatory system and the intestines. Thus, in this embodiment of the book 20, the model assembly 22 represents anatomy of the human body, and one of the plurality of model components 28a - 28h represents the anterior muscles of a human leg. The book 22 also includes a plurality of connectors 30a - 30g (only 30a and 30b shown in **FIG. 1** for clarity) to attach a respective one of the model components 28a - 28h to a respective one of the pages 24a - 24h.

When the book 20 is closed as shown in **FIG. 1****,** the model components combine to form the model assembly 22, and the model assembly 22 is completely contained within the book 20. More particularly, the book 20 can lie flat on either its front cover or back, respectively. This allows one to ship, display and store the book much easier and more efficiently than a book that includes a model protruding from one of the book's covers. When the book 20 is opened as shown in **FIGS. 2 - 6**, one or more model components 28a - 28h are separated from the model assembly 22, while the other model components 28b - 28h remain combined to form the model in a partially assembled state. As a reader turns the pages 24a - 24h, one or more model components 28a - 28h are separated from the model assembly 22 to reveal the model assembly in partially assembled states that progressively include fewer and fewer combined model components. Thus, as the reader turns each page 24a - 24h, the reader is able to study the one or more model components 28a - 28h attached to the turned page 24a - 24h, the remaining partially assembled model, and the differences between the partially assembled model before and after turning each page 24a - 24h. This increases the reader's attention to and comprehension of the information conveyed in the book.

The model assembly 22 can represent any desired subject. For example, the model assembly can represent any desired machine, organism, structure or system. In this and certain other embodiments, the model assembly 22 represents a human body, and each of the model components 28a - 28h (discussed in greater detail in conjunction with the **FIG. 7**) represents an element of the human body. In other embodiments, the model assembly can represent a race car, and the model components can represent, respectively, the body, engine, wheels, chassis and any other desired part of a race car. Or, the model assembly can represent an internal combustion engine, and the model components can represent, respectively, the cam shaft, the head, the valves, the springs, the crankshaft, the carburetor and any other desired part of an engine. In still other embodiments, the book can include two or more model assemblies, for example, one model assembly can represent a car and another model assembly can represent the engine of the car, or one model assembly can represent one car and another model assembly can represent a different car.

Still referring to **FIG. 1****,** in this and certain other embodiments, the pages 24a - 24h include text (not shown) and are hingedly bound together to form the spine 26 using conventional binding techniques. For example, the pages 24a - 24h can be stitched together, glued together, stitched or glued to an additional backing material (not shown), hole punched and inserted into binder rings or a spiral, or bound together in any desired manner that allows a reader to turn one or more pages 24a - 24h at time. Each of the pages 24a - 24h also has a page thickness that is the same or approximately the same as the other pages 24a - 24h of the book 20. In other embodiments each page's thickness can vary relative to another page's thickness. The pages 24a - 24h can be made from any conventional material such as cardboard, paper, laminated paper and foam, plastic, fabric or any other desired material. The text can convey information relating to one or more of the model components 28a - 28h, to the model assembly 22, or any other desired information.

**FIG. 2** is a perspective view of the book 20 in **FIG. 1** opened to the first page 24a. In this and certain other embodiments, when the book 20 is opened to the first page 24a, each of the model components 28a - 28h remain combined to form the model assembly 22. The connectors 30a - 30h each attach a respective one of the model components 28a - 28h to a respective one of the pages 24a - 24h.

Each of the connectors 30a - 30g includes a first end 31a attached to a respective one of the pages 24a - 24g, and a second end 31b attached to one or more of the components 28a - 28g. In addition, each of the connectors 30a - 30g may be located anywhere desired relative to the other connectors 30a - 30g. For example, the connectors 30a - 30g may be located to allow respective model components 28a - 28h to combine with other model components 28a - 28h when the book 20 is closed and to allow respective model components 28a - 28g to be separated from the model assembly 22 as a reader turns the pages 24a - 24g.

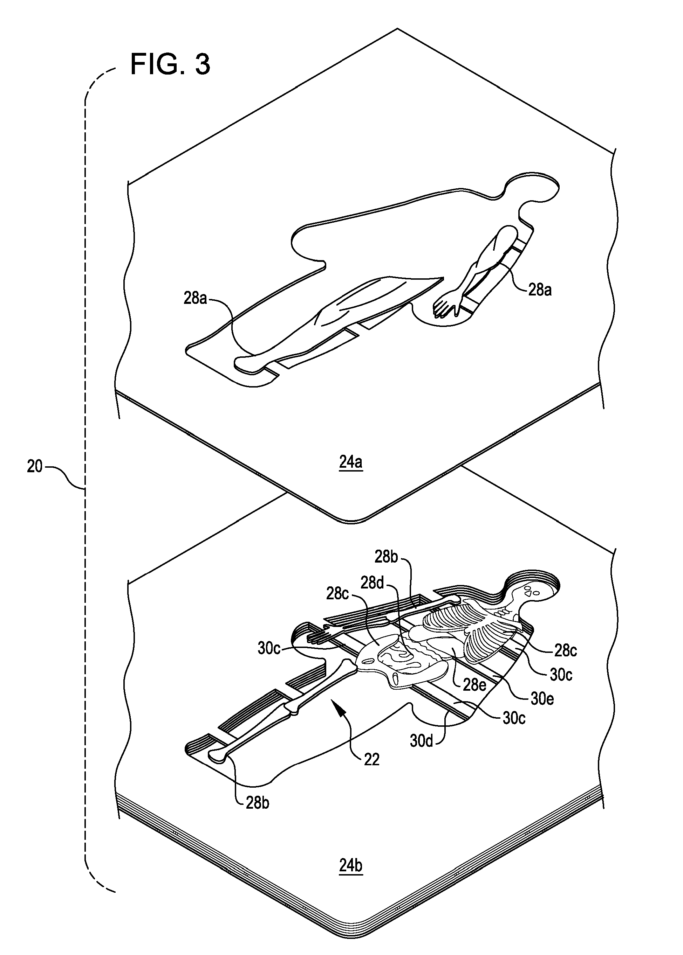

In this and certain other embodiments, connectors 30a, 30c and 30d each attach a respective model component 28a, 28c and 28d to a respective page 24a, 24c and 24d, and are vertically aligned relative to each other. Vertical alignment here means that as one views the first page 24a of the book 20, one sees the connector 30a that attaches the model component 28a to the first page 24a. The connectors 30c and 30d attached to the subsequent, respective pages are located behind the connector 30a, and are thus substantially hidden from the reader. Likewise, connectors 30e - 30g (not shown in **FIG. 2****,** but 30e is shown in **FIG. 3**) each attach a respective model component 28e - 28g to a respective page 24e - 24g, and are vertically aligned relative to each other. The vertical alignment allows the reader to more easily focus on the model components 28a - 28h, and the remaining partially assembled model. That is, the connectors 30a - 30g are located to minimize attention to them as the reader studies one or more model components 28a - 28h and/or the model 22 or a portion of the model.

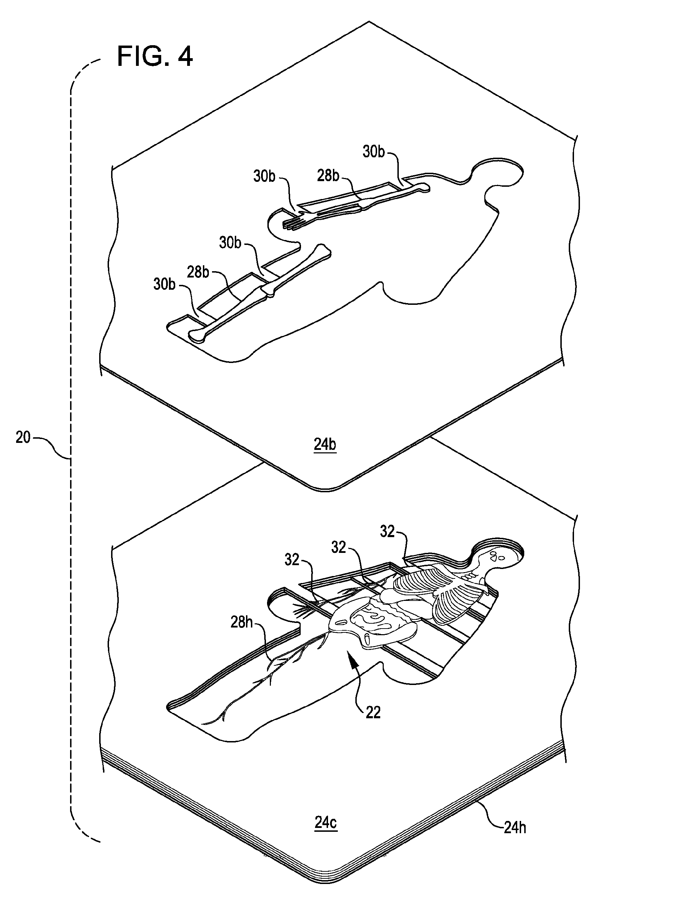

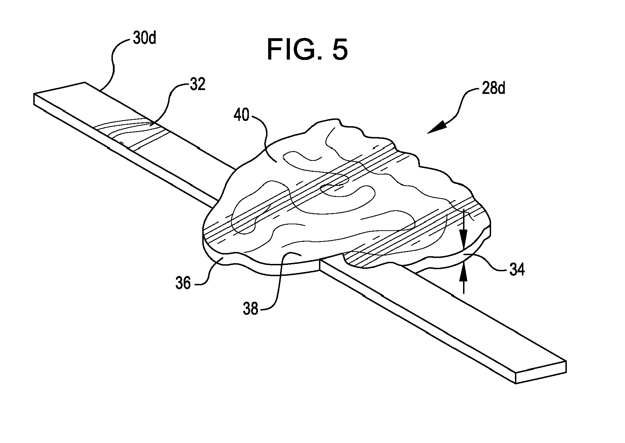

In addition, each of the connectors 30a - 30g has a surface 31c that may include any desired image. For example, the surface 31c may be colored to reduce the probability that a reader's attention will be attracted to the connector, and thus away from the model component that the connector attaches to the page. Or, the surface 31c may include text (not shown) to compliment the model component that the connector attaches to the page or to compliment information provided elsewhere in the book 20. Or, the surface may include a graphic (not shown here but shown in **FIGS. 4** and **5**) to compliment the model component that the connector attaches to the page or to compliment information provided elsewhere in the book 20.

In this and certain other embodiments, the connector 30c includes a graphic 32 (shown in **FIGS. 4** and **5**) that compliments the model component 28h on another, subsequent page 24h. This may be desirable when a model component 28h is viewable before the reader reaches the page 24h that the model component 28h is attached to, and the connector 30c of the model component 28c that is connected to the currently exposed page 24c obstructs a portion of the model component 28h. For example, as shown in **FIGS. 4** and **5****,** in this and certain other embodiments, the connector 30c that attaches the pelvis 28c to page 24c includes a graphic of a portion of the circulatory system 28h.

In this and certain other embodiments, each of the connectors 30a - 30g include cardboard, and are made by stamping a sheet of cardboard with a die appropriately profiled to leave the connector and respective model component extending from the page. In other embodiments, one or more connectors 30a - 30g can be made from any conventional material such as metal wire or rod, resilient rubber or plastic, or any other desired material strong enough to support one or more model components that the connectors attach to a respective page. Furthermore, in other embodiments, one or more of the connectors 30a - 30g and/or respective model components 28a - 28h may be attached to the page and connector, respectively, by any desired conventional technique, such as gluing with an adhesive.

**FIGS. 3** and **4** are partial, perspective views of a respective one of the book's pages (24a in **FIG. 3****,** and 24b in **FIG. 4**) and the remaining, subsequent pages of the book 20 in **FIGS. 1** and **2****,** according to an embodiment of the invention. **FIG. 3** shows the first page 24a of the book 20 following the cover, while **FIG. 4** shows the second page 24b.

As discussed elsewhere herein, each of the model components 28a - 28h are attached to respective pages 24a - 24h so that as a reader turns succeeding pages 24a - 24h, the model assembly 22 is disassembled in layers. For example, in this and certain other embodiments, the model assembly 22 represents the human body and as the reader turns succeeding pages 24a - 24h, the human body is revealed in layers progressing from the portion of the model assembly 22 that represents the human anterior to the portion of the model assembly 22 that represents the human posterior. Starting with page 24a, the first model component 28a separated from the model assembly 22 is the component that represents anterior muscles of a left arm and anterior muscles of a left leg. Then, as the reader turns the next page 24b, the next model component 28b separated from the model assembly 22 is the component that represents bones of the right arm and bones of the right leg.

Each of the model components 28a - 28h represents either a whole element of the book's subject or a portion of an element. For example, in this and certain other embodiments, the model component 28a represents a portion of the human muscular system. Specifically, the model component 28a represents the anterior muscles of the left arm and left leg. In this specific embodiment, none of the other model components 28b - 28h represent another portion of the human muscular system. The model component 28b, however, represents a portion of the human skeletal system, and the model component 28c represents other portions of the skeletal system. Specifically, the model component 28b represents bones of the right arm and right leg, the model component 28c represents bones of the pelvis and rib cage. The model component 28d represents human intestines.

**FIG. 5** is a perspective view of a component of the model assembly 22 shown in **FIGS. 1 - 4**, according to an embodiment of the invention.

Each of the model components 28a - 28h may have any desired shape. For example, one or more of the components 28a - 28h may be flat and shaped in two dimensions to resemble the element of the book's subject that the model component represents. In this and certain other embodiments, each of the model components 28a - 28g has a thickness 34 that is the same thickness as the respective page 24a - 24g that they are attached to, and a periphery 36 that defines the two-dimensional shape of the respective model components 28a - 28g. More specifically, the model component 28d has a periphery 36 that is similar to the periphery of human intestines as disposed in a human body. Likewise, the model components 28a, 28b, and 28c (**FIGS. 3** and **4**) each has a periphery that is similar to the periphery of the respective human anatomy that each represents. In addition, other embodiments of the model components 28a - 28g may be thicker and/or thinner than the respective page 24a - 24g that they are attached to.

By having a two-dimensional shape that is similar to the shape of the respective element of the book 20, the identity of the element represented by each model component 28a - 28h can be more easily recognized by a reader. Furthermore, the spatial relationship of each element relative to other elements of the book's subject is more easily conveyed to the reader, and thus implied and/or inferred information from the relative spatial relationships are also easily conveyed to the reader.

Still referring to **FIG. 5****,** each of the model components may include any desired image. For example, one or more of the model components 28a - 28h may have a surface that includes a graphic to further identify the element of the book's subject that the one or more model components 28a - 28h represent. In this and certain other embodiments, each of the model components 28a - 28g has a surface that includes a graphic. More specifically, the model component 28d has a surface 38 that includes a graphic 40 that is an image of human intestines. Likewise, the model components 28a, 28b, and 28c (**FIGS. 3** and **4**) each has a surface that includes a graphic that is an image of the respective human anatomy that each of the components 28a, 28b, and 28c represents.

Still referring to **FIG. 5** each of the model components 28a - 28h may include any desired material. For example, in this and certain other embodiments, each of the model components 28a - 28h include cardboard. In other embodiments the model components 28a - 28h may include conventional plastic, metal or fabric and can be formed using conventional molding techniques.

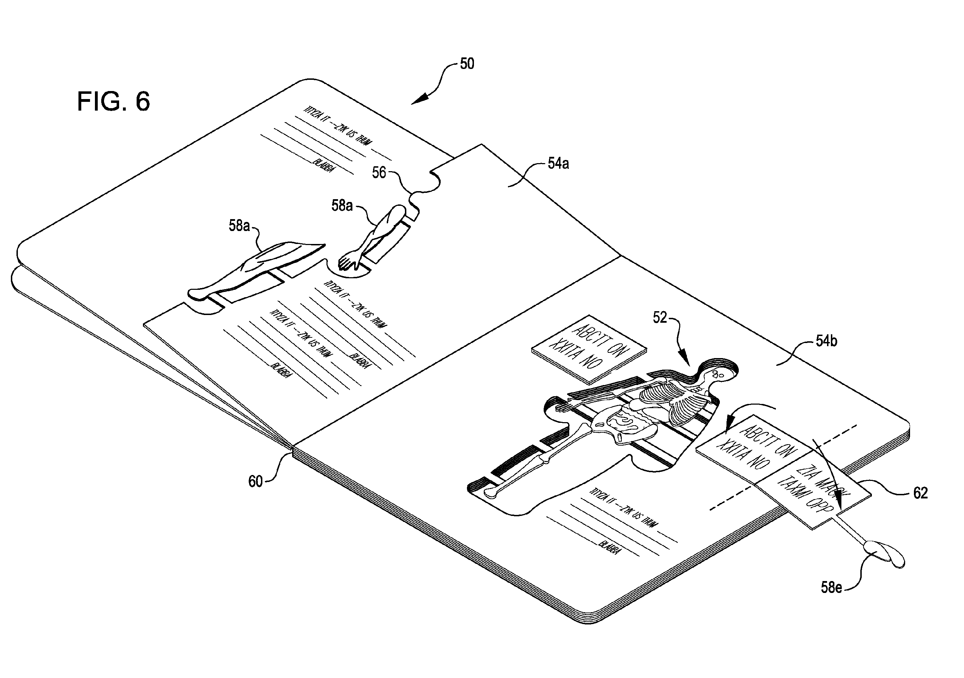

**FIG. 6** is a perspective view of another book 50 that includes a model assembly 52, according to another embodiment of the invention. In this and certain other embodiments, the book 50 may include a page 54a that includes a profiled edge 56 defining a cut-out that lies adjacent to a model component 58a but does not surround the component. For example, a page may have a surface area that is approximately half of the surface area of a subsequent page 54b. Furthermore, in this and certain other embodiments, one or more of the model components, one of which is referred to in **FIG. 6** as 58e can be hingedly attached to a respective one of the pages 54a - 54h via a flap 62.
Still other embodiments are possible. For example, the book 50 may include a page (not shown) that is not bound to the other pages at the spine 60, but rather, is bound to respective one or more other pages at a binding axis (not shown) that is not at the spine 60. For example, a page and another page may be hingedly attached to each other to form a binding axis that is substantially perpendicular to the spine 60. In another example, the binding axis (not shown) can be oriented relative to the spine 60 at any desired angle other that 90 degrees. In yet another example, one or more of the model components may be hingedly attached directly to a respective one of the pages 54a - 54h.

Naturally, in order to satisfy local and specific requirements, a person skilled in the art may apply to the solution described above many logical and/or physical modifications and alterations. More specifically, although this solution has been described with a certain degree of particularity with reference to one or more embodiments thereof, it should be understood that various omissions, substitutions and changes in the form and details as well as other embodiments are possible. Particularly, different embodiments of the invention may even be practiced without the specific details (such as the numerical examples) set forth in the preceding description to provide a more thorough understanding thereof; conversely, well-known features may have been omitted or simplified in order not to obscure the description with unnecessary particulars. Moreover, it is expressly intended that specific elements and/or method steps described in connection with any embodiment of the disclosed solution may be incorporated in any other embodiment as a matter of general design choice.

## Claims

1. A book, comprising:
a plurality of pages bound together; and
a plurality of model components that, when the book is closed, combine to form a model assembly that represents a subject of the book, the plurality of model components includes:
a first flat model component attached to one of the pages, wherein the first model component represents an element of the book's subject and has a two-dimensional shape similar to the shape of the element that the first model component represents, and
a second flat model component attached to another of the pages, wherein the second model component represents another element of the book's subject and has a two-dimensional shape similar to the shape of the element that the second model component represents.

2. The book of claim 1 wherein the subj ect of the book includes human anatomy, and/or wherein the elements of the book's subject include the intestines and the circulatory system, and/or a portion of the muscular system and a portion of the skeletal system.

3. The book of claim 1 or 2 wherein:
the first model component represents muscles in the right arm and the right leg of a human; and
the second model component represents bones in the left arm and the left leg of a human.

4. The book of any claim from 1 to 3 wherein the first model component's two-dimensional shape is defined by the first model component's periphery.

5. The book of any claim from 1 to 4 wherein each of the plurality of model components represents a respective element of the book's subject, and has a two-dimensional shape similar to the shape of the respective element that the model component represents.

6. The book of any claim from 1 to 5 wherein the first model component includes a graphic that represents the element of the book's subject that the first model component represents.

7. The book of any claim from 1 to 6 wherein, when the book is closed, each of the plurality of model components is disposed above and/or below the immediately adjacent model component.

8. The book of any claim from 1 to 7 further comprising a connector that attaches the first model component to the component's respective page.

9. The book of claim 8 wherein the connector includes a graphic for obscuring the appearance of the connector, and/or a black surface for obscuring the appearance of the connector, and/or a graphic for complimenting another of the plurality of model components.

10. The book of claim 8, wherein the connector includes a graphic; and wherein:
the first model component represents intestines of a human
the second model component represents a portion of the circulatory system of a human, and
the graphic represents a portion of the portion of the circulatory system represented by the second model component.

11. The book of any claim from 1 to 10 wherein at least one of the model components is hingedly attached to the component's respective page.

12. The book of any claim from 1 to 11 herein at least one of the plurality of pages includes a profiled edge located such that, when the book is closed, the profiled edge is adjacent the model assembly.

13. The book of any claim from 1 to 12 further comprising:
a flap hingedly attached to one of the pages, and
a connector that attaches the first model component to the flap.

14. A book, comprising:
a plurality of pages bound together;
a plurality of model components that, when the book is closed, combine to form a model assembly that represents a subject of the book, the plurality of model components includes:
a first model component that is flat and is attached to one of the plurality of pages, wherein the first model component represents an element of the book's subject and has a two-dimensional shape similar to the shape of the element that the first model component represents, and
a second model component that is flat and is attached to another of the plurality of pages, wherein the second model component represents another element of the book's subject and has a two-dimensional shape similar to the shape of the element that the second model component represents; and
a plurality of connectors, each attaching a respective one of the plurality of model components to a respective one of the plurality of pages, the plurality of connectors includes:
a first connector that attaches the first model component to the first model component's respective page, and
a second connector that attaches the second model component to the second model component's respective page, and is disposed underneath the first connector, when the book is closed.

15. The book of claim 14, wherein, the first connector covers more than half of the second connector, or all of the second connector.

16. The book of claim 14 or 15, wherein:
the plurality of model components includes a third model component, and
the first connector includes a graphic that compliments the third model component, and/or text that compliments the third model component.
